# EUROPEAN PATENT APPLICATION

(11) **EP 4 024 926 A1**
(43) Date of publication of application: **06.07.2022**
(21) Application number: 20383167.2
(22) Date of filing: 29.12.2020
(51) Int. Cl.: H04W 12/0433, H04W 12/30, H04L 29/06, H04W 12/06

(54) **METHOD AND DEVICES FOR GENERATING PROFILES IN UNIVERSAL INTEGRATED CIRCUIT CARDS**

(71) Applicant: Telefónica, S.A., 28013 Madrid (ES)
(72) Inventor: HONORATO GARCIA, Jose, Ignacio, 28013 MADRID (ES); SANCHEZ MUÑOZ, Blanca, Esther, 28013 MADRID (ES)
(74) Representative: Herrero & Asociados, S.L.

(57) **Abstract**

A method for generating profiles in a UICC comprising a SIM (100) or Self_SIM which attempts to connect a network (400) of a mobile network operator (MNO). A MNO server, receiving an authentication request from the SIM (100), generates keys and data for provision of this SIM (100) in real time on the network (400). The server is a dedicated MNO node or any of the MNO nodes standardized for authentication and profiles management in mobile networks: HLR/AUCs (500) in 2G, HSS in 3G/4G, UDM-UDR in 5G. The data generated by the MNO server is provisioned on an IT system of the MNO and the generated keys are authenticated on the network (400). The method can be provided by the MNO for serving itself or as a service of the MNO to serve other mobile network operators. The MNO providing the Self_SIM (100) triggers (800) the activation (700) of the new generated SIM profile, which can be downloaded using the RSP elements (600) of the MNO or of the other mobile network operators for which the MNO generated the new SIM profile.

## Description

### Field of the invention

The present invention has its application within the telecommunication networks, more specifically, relates to the provision of subscriber identity module (SIM) profiles to a universal integrated circuit card (UICC), also known as a SIM card.

More particularly, the present invention refers to a method of SIM profiles generation (the generation of keys for authentication included) in a UICC device (e.g., embedded UICC, integrated UICC) and the devices thereof.

### Background of the invention

An embedded universal integrated circuit card (eUICC) is a secure element that contains one or more subscription Profiles. Each Profile enables the eUICC to function in the same way as a removable SIM issued by the operator that created it.

Telecom operators provide SIM cards to customers in order to guarantee user identification against the network and provides security to any related process. Same values that operators store on its premises (basically Authentication Center/ Home Subscriber Server, AUC/HSS, for network authentication; but additionally, other credentials for enabling secure Over-The-Air (OTA) services, secure remote subscription delivery, ...). Every one of these elements need to be fed up with corresponding credentials (symmetric keys). Same data are stored in a secure way in operators' sites and need to be stored in secure way in SIM manufacturing systems and SIM card.

Up to know, the number of mobile connected devices was huge, but it always focusses on small number of Original Equipment Manufacturers (OEMs) and type of devices. In addition, this kind of devices used removable SIM, so only SIM manufacturer and operator should be connected to agree on keys for any SIM card.

Thanks to the explosion of Internet of Things (loT), billions of regular electronic devices begin to be connected, the number of players becomes huge and, in most cases, due to device limitation, they include an embedded UICC or SIM (eUICC, eSIM). The scenario is unmanageable when, due to efficiencies and cost reduction on manufacturing, the SIMs are personalized directly on OEM site. In that case, SIM vendor-OEM or/and operator-OEM communication is needed.

Problems of secure eSIM personalization on different manufacturing plant are not solved or involve an approach too complex which requires efforts on integration of the Information technology (IT) infrastructures between OEM/SIM vendor and eventually third parties. Some solutions coming to the market tries to provide flexibilization of the processes without avoiding 100% them and/or creating new security gaps due to usage of "non trusted" environment.

On the other side, maximizing mobile connectivity on low cost loT devices has no efficient model of personalization neither operator resources consume in terms of International Mobile Subscriber Identities (IMSIs) reservation, ...

Recently, trying to solve same barriers of the complex ecosystem, Deutsche Telekom (DT) has presented 'nuSIM' concept as an initiative to allow final OEMs to manufacture and personalize proprietary integrated SIMs (iUICCs: integrated universal integrated circuit cards) directly on their premises. This scenario presents several capabilities limitation, handicaps in some security aspects (specially related to the management of critical info in manufacturing) and requires interconnexion among different players.

Therefore, in order to avoid these barriers and enable new business opportunities, there is a need in the state of the art for providing an universal integrated circuit card (UICC) with a mechanism to auto-generate the keys for authentication and enabling secure services, without any external personalization process and before the mobile device is trying to connect to the network.

### Summary of the invention

The present invention solves the aforementioned problems and overcomes previously explained state-of-art limitations by providing a method which uses different mechanisms for offline key generation, these mechanisms being uncoupled from each other, in order to separate the personalization of the UICC (e.g., eUICC, iUICC) from network provisioning processes.

In order to warrantee highest security of the solution, no "process" is executed out of the SIM or the secure element playing this role (e.g., eUICC, iUICC).

The use of an offline mechanism forces the MNO side to create "on the fly" provisioning processes at least for the IT, core network, eSIM management and OTA servers. The number of "on the fly" processes to be executed depends on the configuration selected and the integration done between SIM vendor and MNO. The MNO needs to identify any request of this type of SIM cards and forwards it to the core network that could manage it, using dedicated HSS/AUC nodes or dedicated HSS/AUC software for these SIM cards on a regular HSS node.

After authentication of the UICC device on the mobile network, according to the "user profile" on the network, this profile can be fully functional or only just configured to allow a susbcriber download.

The proposed method of providing a SIM with capabilities of keys auto-generation (so called "Self_SIM service" here) can be provided by a mobile network operator for serving itself or can be provided as a service of the mobile network operator to serve other mobile network operators. In the latter case, the (first) mobile network operator providing the Self_SIM is in charge of notifying or triggering the served mobile network operator, so that the served MNO can take decisions and proceed to download the SIM profile of said served MNO, the SIM profile having been generated by the first MNO.

The present invention can be applied to 4G/5G mobile networks, previous 2G/3G networks, or other future (mobile or not) networks that uses or will use SIMs or equivalent secure modules for authentication.

An aspect of the present invention refers to a method for generating SIM profiles for a UICC device which comprises the following steps:
- sending an authentication request from a subscriber identity module (SIM) which attempts to connect a network of a mobile network operator (MNO),
- generating keys and data by a server of the first MNO, receiving the authentication request, for provision of the SIM in real time on the network,
- provisioning the generated data from the server on an IT system of the MNO or on the IT system(s) of one or more mobile network operator(s) different from the MNO,
- authenticating the generated keys on the network by requesting a challenge generation and receiving the generated challenge in the SIM.

Another aspect of the present invention refers to a UICC (eUICC or iUICC) whose SIM profile is generated by the method described before.

Another aspect of the present invention refers to a mobile network operator (MNO) server providing a UICC with an auto-generated SIM profile by implementing the method described before. This operator server can be either implemented in a dedicated node of the MNO or incorporated in the nodes for authentication and profiles management defined by the standardized systems of the cellular networks: HLR/AUCs (Home Location Registers/Authentication centers) in 2G networks, HSS (Home Subscriber Server) in 3G or 4G networks, UDM-UDR (Unified Data Management/ Unified Data Repository) in 5G networks.

The method in accordance with the above-described aspects of the invention has a number of advantages with respect to the aforementioned prior art, which can be summarized as follows:
- This method is robust, secure and configurable. This configuration can be used for enriching security framework and/or to solve any issue or vulnerability detected. This method of SIM profile (self-)generation, which includes the generation of authentication/secure keys, provides the same level of security as right now is fulfilling "data centers" of SIM vendors.
- Flexibility on existing manufacturing process: The present invention allows SIM vendors to deliver (e)SIMs products and/or Operating Systems for (e)SIM products to device OEMs (chipset/module makers) for personalization on manufacturing plants without any integration or data exchange among them. Additionally, data exchange between SIM vendor and mobile network operator (MNO) is also minimized.
- The present invention allows the simplification of UICC personalization and covers industry gap due to in site personalization.
- The present invention can be applied to previous or future authentication algorithms o processes to be used on networks. In fact, the present invention can also be applied to future blockchain models that may arise, both for customer authentication chains in the network (decentralizing the current model of authentications) and for the generation of blockchains used in additional services and requiring secure processing in the SIM. The present invention is valid for symetric/asymetric keys (including keys used in blockchain).

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a diagram of the network architecture of a mobile network operator, according to a preferred embodiment of the invention, in a possible scenario where a dedicated network node is used for self-generation of keys for SIM products.
Figure 2 shows a flow diagram for the self-generation of keys for SIM products using a dedicated network node of the mobile network operator.
Figure 3 shows a diagram of the network architecture of a mobile network operator, according to a preferred embodiment of the invention, in a possible scenario where the authentication nodes are enhanced to be used for supporting self-generation of keys for SIM products.
Figure 4 shows a flow diagram for the self-generation of keys for SIM products using enhanced authentication nodes of the mobile network operator.
Figure 5 shows a diagram of the network architecture of a mobile network operator, according to a preferred embodiment of the invention, in a possible scenario where a dedicated network node is used for self-generation of keys for SIM products and the new generated SIM profile is downloaded in the mobile network operator.
Figure 6 shows a flow diagram for the configuration of the new SIM profile download using a dedicated network node of the mobile network operator.
Figure 7 shows a diagram of the network architecture of a mobile network operator, according to a preferred embodiment of the invention, in a possible scenario where the authentication nodes are enhanced to be used for supporting self-generation of keys for SIM products and the new generated SIM profile is downloaded in the mobile network operator.
Figure 8 shows a flow diagram of the configuration of the new SIM profile download using enhanced authentication nodes of the mobile network operator.
Figure 9 shows a diagram of the network architecture of a mobile network operator, according to a preferred embodiment of the invention, in a possible scenario where a dedicated network node is used for self-generation of keys for SIM products and the mobile network operator plays as a broker of connectivity among other mobile network operators.
Figure 10 shows a flow diagram for the self-generation of keys for SIM products using a dedicated network node of the mobile network operator playing as the broker of connectivity.
Figure 11 shows a diagram of the network architecture of a mobile network operator, according to a preferred embodiment of the invention, in a possible scenario where a dedicated network node is used for self-generation of keys for SIM products and the mobile network operator plays as a broker of connectivity in the downloading of the new generated SIM profile.
Figure 12 shows a flow diagram for the configuration of the new SIM profile download using a dedicated network node of the mobile network operator playing as a broker of connectivity.
Figure 13 shows a diagram of the network architecture of a mobile network operator, according to a preferred embodiment of the invention, in a possible scenario where a dedicated network node is used for self-generation of keys for SIM products and the mobile network operator plays as a broker of connectivity using the broker infrastructure of remote SIM provisioning in the downloading of the new generated SIM profile.
Figure 14 shows a flow diagram for the configuration of the new SIM profile download using the broker infrastructure of remote SIM provisioning and a dedicated network node of the mobile network operator playing as a broker of connectivity.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

A preferred embodiment of the invention relates to a method for self-generation of SIM profiles (including keys) in a UICC (e.g., eUICC, iUICC).

The UICC implements a mechanism, based on an app (Javacard, STK, ...) or based on a native feature of the OS, to generate in a secure way i) a default profile and ii) related data (including secure keys).

All the functions/algorithms of SIM profile generation in the UICC are protected against external attacks such as Differential Power Analysis (DPA), etc., and to avoid vulnerability situations related to how the sw/hw implementation is carried to implement, for example, the Milenage algorithm for the UMTS authentication and key generation functions.

The default profile generation (file structure and content) can be performed in different moments, for example, during OS loading on UICC chipset, after eUICC power on (electrical signal received), during eUICC initialization process inside a device... Same behaviour can apply to secret keys generation. This "sensible" content can be generated, depending on the eSIM developer. at the same time of the rest data or after it; for example, the file structure of the default profile can be pre-installed and, during offline "personalization" process, only "key data" are generated.

The Key generation algorithms are robust, secret, diversifiable, and configurable per SIM vendor and per range of SW distribution. The generation keys process is a random/pseudorandom generation, with low collision (close to 0 overlapping among different SIMs) and faster enough to ensure there is no impact on any other process (i.e. device initialization of USIM profile).

Although it is possible that eSIM vendors provide different hw/sw for each flavour (M2M or Consumer), it is possible to decide during personalization time the selected "mode" to be activated: for Consumer or M2M Remote SIM Provisioning (RSP) "flavours". Once the mode is selected, only "official" profile of this type can be downloaded. Only if the eUICC is "fully re-started", the new profile according to the new configuration (if changed) can be generated and activated.

Depending on the eSIM vendor and/or customer/MNO, the profile generation creates either a small functional profile or a full profile. Usually, when the default profile will be used only as a bootstrap profile, first option seems desirable. If the created SIM profile is going to be the "operational" once, it is recommended a more complete profile.

The profile generation comprises generating a file structure and content to be stored in the memory of the UICC according to the generated file structure.

The file structure can be pre-installed for avoiding complexity and timing execution.

The content comprises critical data, which includes identifiers (e.g., the integrated circuit card identifier or ICC-ID, international mobile subscriber identity or IMSI, etc.) and security framework configuration (e.g., to be used inside specific ranges of MNO ICC-IDs/IMSIs, to be used in the range of a dedicated MNO Mobile Network Code or MNC, etc.). The offline generation of critical data (keys, included) is SIM vendor / MNO dependant. The generated set of keys us used to access the network identifying the client and, later, the keys will be used to encrypt the communications according to the 3GPP standard for the corresponding mobile service (3G, LTE, 5G, ...). Random offline keys are generated for OTA, remote management servers, ... As they are asymmetric keys, the keys that are generated offline must be the same as those generated on the network, so that they can match when the calculation is done on both sides.

The configuration of the memory of the eUICC can be based on the selection and post activation processes selected.

Data configuration in network side: Any selection done for each product is "predefined" and configured on the MNO service provider side in order to route network requests and calculate on the fly keys for AUTH processes and eSIM management at SM-SR /SM-DP(+) / OTA. This configuration can be just a range of IMSIs identification in order to forward network request for this SIMs to the "on the fly" HSS that could manage them.

### Mobile Network authentication process:

The communication between the SIM and the Network for the MUTUAL AUTHENTICATION process is standardized by 3GPP. The data (keys and preloaded values) involved in the standarized steps for this authentication are generated on the fly by the method proposed here. The generated data are used by the SIM vendors, as well as operators and manufactures of the network servers involved in the standardized authentication: HLR/AUCs in 2G networks, HSS in 3G or 4G networks, UDM-UDR in 5G networks.

Based on the basis that for a vendor of SIM_OS and a 'X' number of that SIM product to be manufactured, it is necessary to agree on the values to be used (it can be an initial seed + a value that is randomly generated based on certain "aspects", or directly a value that is generated randomly)- These functions are equivalent to random functions used on data preparation systems at SIM vendors plants. It could be implemented on hw, sw or mix of both, it has to be robust, implemented taking into consideration countermeasures against Hw and sw attacks, data collision of randomization will be close to 0 (if no 0), the algorithms and data used on random generation will be secret, its usage and configuration could change dynamically according to range of products, per OEMS, per MNOS, per SIM vendor, volume of SIMs,... This algorithms and potential enhancements could be part of the SIM vendor "know-how" and it allows to differentiate among them providing extra value to their customers.
Although is not a secret key, IMSI is the basis of the process. Generating valid and expected IMSIs on the network is critical because AUTH is always performed for an IMSI delivered to the network. Related to that, IMSI may not exist in the network, so network nodes must be prepared to identify it (at least the numbering map has to exist for signalling routing), and if valid, generate 'on the fly' the required log entry and/or authentication vectors. This also prevents the use of subscription consumption licenses that do not have activity or are not connecting to the network. No numbering (resources) are wasted.
For other master values creation such as ICC-ID, EID and rest of parameters that are provided from MNO to SIM vendors as input for card/profile generation, it would follow same rationale described for previous IMSI or be generated based on this one (for example, in case the IMSI value will be reconfigured). Regarding parameters that are sent back from SIM vendor to MNO related to SIM access conditions (PIN, PUK, ADMIN codes and others if needed) they could be fixed to 'by default values', generated based on other parameters. It should be up to configuration.
To remark that it is very important that there is no collision of generated IMSIs (zero collision is ideal world). It means, randomly in each "product type" or "group of SIMs" a different IMSI is generated on each card. For example, "Thales", batch of 10K SIMs within the range of delegated IMSIs "21405 000000xxxx" (depending on the algorithm, bigger range reservation may be needed than ideally expected ...).
Another potential solution is for the network to assign IMSI in real time (for example, if the IMSI that SIM delivers to network is already in use). For that, when the ME performs an AUTH_REQ to the network with an IMSI, the network will return in one of the parameters the appropriate IMSI that would correspond to it. That IMSI is assigned on the network, and the mobile device requests again a new AUTH_REQ, this time with the appropriate value. As an example, we can think of signalling in the AMF field that an IMSI value is sent in the RAND field (which can be encrypted). In this way the AMF field that is available for MNOs is used to signal the working mode of the SIM. All this under the scope of current 3GPP processes and standards.

The authentication model of mobile networks is based on mutual authentication: That is, the SIM verifies the network and the network verifies the SIM. To follow this standardized process, it is necessary that when the network sends a challenge and the validation token, the SIM will be able to verify that the network token inside is valid and it can generate an expected response to the network. So, both nodes (HSS/AUC-SIM) must use the same key values.

How the random/pseudorandom authentication key Ki or the secret key K is generated in both elements (network and SIM card) at the same time is the quiz of the issue. Especially since the encrypted Operator Code OPc to be used is calculated based on the secret Operator Code OP and the secret key K of each SIM. It is normal for the SIM to store the generated OPc on fire from personalization time. The OP (also available on the network) may be recorded on each SIM (allowed) but for security reasons it is recommended avoid it. In this sense, if OP is recorded in the SIM instead of OPc, to minimize exposures to attacks it should be used different OPs by groups of SIMs, OP could be "one use" only (SIM calculates OPc and just after is automatically deleted), OP could be stored ciphered or calculated in real time based on different contents.

According to a first embodiment of the invention, the (random/pseudo-random) the authentication key Ki is totally generated by algorithms inside SIM, using a different value known by SIM/HW, which can be integrated in the process joined to a "pre-agreed" seed, that allows to help diversify / increase complexity by product/vendor range. There will be a relationship with the IMSI (the only value that relates in advance SIM and the network).

According to a second embodiment of the invention, the (random/pseudo-random) the authentication key Ki is totally generated by algorithms inside SIM as in the first embodiment but in this case there may also be a "pointer" that can be used to diversify (the type of values to use, the choice of algorithm, etc ...), This selector is delivered among the parameters available on 3GGP specifications. As an example, within the Milenage, the AMF field (respecting field values not available for MNO by specification) involved on the auth process can be used during the network challenge to the SIM. AMF or AK is just an example, but any of the specified parameters for authentication mechanism can be used. In fact, different OPs per SIMs or range of products can be used, being more sophisticated. In that case, this "selector" from the network to the SIM can point out a value or an algorithm from a predefined list.

On top of these two proposals, if SIMs with high capacities (i.e., any eSIM) are used and/or it is estimated that random key generation algorithms may not be robust enough, a hash or electronic signature can be applied to shared vectors in a way that generates a higher layer of security. This functionality can be activated or not by card, product range, manufacturer, ... and requested as default personalization on the SIM or ad-hoc by network request. In this case, if there are differences in the level of "security requirement" required, the highest level always prevails, any attempt to register that does not comply with it will always be discarded.

In case that certificates were issued for SP (Service Provider), SIM/HW vendor and SIM item, the symmetric auth model in the network can be replaced by an asymmetric model based on Public Key Infrastructure (PKI) or based on Elliptic curve cryptography (ECC).

Additionally, mechanisms and approaches that generate randomness in the products can be used. For example, authentication keys Ki that are generated in real time based on fixed values, dynamic values, and/or combination of both that two offline elements must know. In the same way as it is done in electronic tokens, OTPs, ... Examples would be the usage of internal SIM or equipment-device clock, values sent in the challenge to the SIM from the network such as SQN or capturing values associated with the attached network.
- Seed (Master key) to deriver per type of SIM. Derivation based on "random" values such as IMEI or AMF.
- Strength and Resilience of Algorithms

Another possible embodiment of the invention is for the network to accept any card on a first attach attempt (that is, that all the SIM cards can carry the same keys to access the network or the authentication is disabled for all the SIM cards. In addition, in that case the HSS can send a single vector to the SGSN/VLR. As the robustness of keys generation depends on the algorithm used, the operator can decide to:
i) use the self-generated SIM profile (in a UICC / eUICC) as Bootstrap only to connect to the network (the profile is limited for certain uses in the HSS in the network; a minimum network profile cannot take any action except those authorized to load/adjust the "new" profile"), and
ii) download another SIM profile generated by the conventional method.
Thus, the proposed method avoids the integration with the OEM for device loading and production, while allows flexibility to add a SIM profile by using GSMA's secure profile download functionality.

Once the authentication is done, then the network can request the device to notify its IMEI (International Mobile Equipment Identity) and thus perform the correct token calculation based on both parameters (IMSI or any other related SIM value, and IMEI, different per device). From that moment on, a resynchronization is requested to obtain the new vectors already suitable. Above this scenario, there are possible variations to use data like the sequence number SQN, etc.

Once defined the model for auth keys, K and Ki, in mobile networks, the access key for the client directly or the proxy for downloading a new eSIM profile according to the needs of the final MNO in terms of security, the rest of the parameters such as OTA keys, RSM keys, etc., can be defined following the techniques already mentioned according to the needs of each parameter.

Alignment between SIM mechanism selection and the MNO network identifying said SIM is critical. In case of multiple choice of products (differente SIMs configuration availble), MNO must identify each one in order to forward SIM requests to the right "node" and authenticate with the right "mechanism". Fragmentation on the products configuration used could be an strategy trying to minimize security risk again fraudulent attacks. In fact, it could be possible an authentication mechanism on the network based on two steps:For example, the initial stepcould be always an authentication success based on pre-agree data (always the same), then the network would request IMEI (for new real values calculation) and a second step would follow as a re-synchronizaton authentication with "random" values generated with info sharing. As explained previously, same procedures could be applied using other values, instead of IMEI or combining other values with IMEI, which are exchanged during communication SIM-Network. Further details about the exact algorithm and values used are not described in detail for security reasons. The generation of these values (data) must be random, done in a secret way (inside SIM and network based) and not accessible for third parties. This process that generates random contents could imply retry schemes and handle data collision for minimizing it (reduction collisions on primary data such as IMSI or ICCID). Depending on the deployed solution, data reuse and collisions could be accepted (for example when SIMs generate temporal profiles).
After first network authentication, if new SIM profile download is required, SM-DP+ and the involved systems could further implement any existing mechanisms to increase security: GSMA certificate could be required to be installed, check elegibilty policies could be applied, IMEI of device could be validated, and it should be possible to revoke products in case of fraud or vulnerabities detected, This implies that identifying and validatig the SIM or secure hardware trying to attempt network must be possible. Also, UICC SIM procedures and network element procedures must be tested and validated before live implementation.

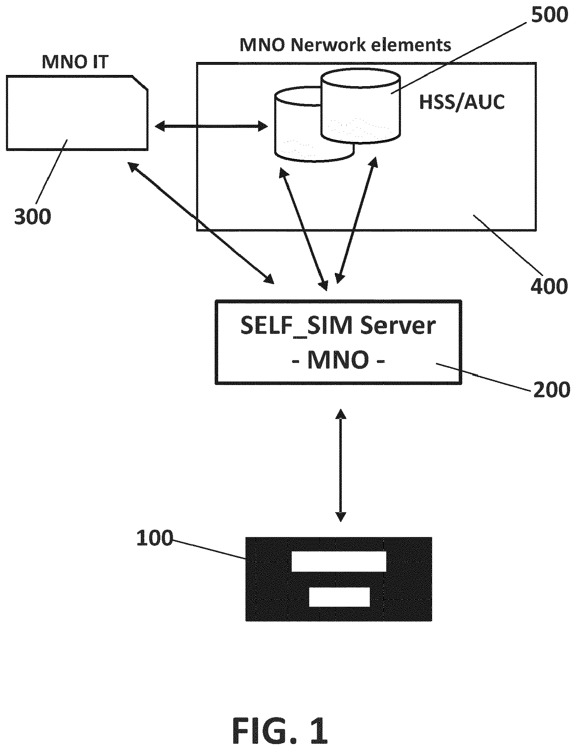

Some examples of possible use-cases enabled by a preferred embodiment of the invention are shown in Figures 1-14.

### References:

Self_SIM refers to a SIM with capabilities of keys auto-generation
- **100**: Self_SIM associated with a first mobile network operator **MNO**
- **200**: Server for providing a Self_SIM (a SIM with capabilities of keys auto-generation) associated with the initial mobile network operator **MNO**
- **300**: IT infrastructure of the first mobile network operator **MNO**
- **320**: IT infrastructure of a second mobile network operator **MNO2**
- **330**: IT infrastructure of a third mobile network operator **MNO3**
- **400**: network elements of the first mobile network operator **MNO**
- **420**: IT and network elements of the second mobile network operator **MNO2**
- **430**: IT and network elements of the third mobile network operator **MNO3**
- **500**: HSS and AUC nodes of the first mobile network operator **MNO**
- **510**: HSS and AUC nodes enhanced for supporting the Self_SIM associated with the first mobile network operator **MNO**
- **520**: HSS and AUC nodes of the second mobile network operator **MNO2**
- **530**: HSS and AUC nodes of the third mobile network operator **MNO3**
- **600**: RSP elements of the first mobile network operator **MNO**
- **620**: RSP elements of a second mobile network operator **MNO2**
- **630**: RSP elements of a third mobile network operator **MNO3**
- **700**: RSP download and activation of a SIM profile associated with the first mobile network operator **MNO**
- **720**: RSP download and activation of a SIM profile associated with the second mobile network operator **MNO2**
- **800**: triggering by the first mobile network operator **MNO**
- **820**: triggering by the second mobile network operator **MNO2**

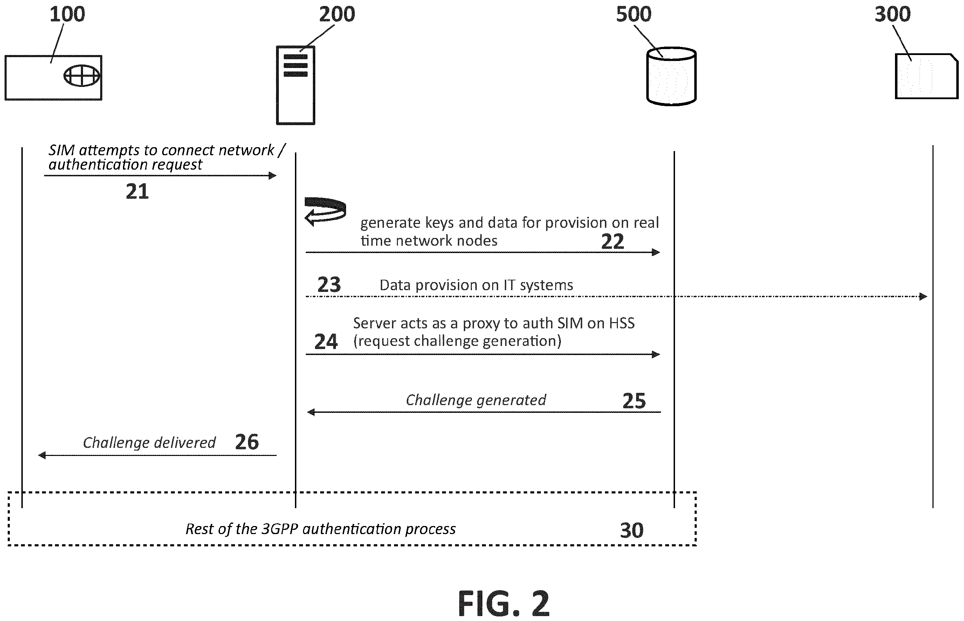

Figure 1 shows the network architecture diagram of a, first, mobile network operator, **MNO,** which uses a dedicated network node for self-generation of keys to provide a SIM **100,** here called the Self_SIM **100,** by following the steps illustrated in the flow diagram of Figure 2:

| | |
|---|---|
| step **21** | The SIM of a UICC playing the Self_SIM **100** attempts to connect network sending an authentication request. |
| step **22** | Based on different authentications mechanisms as described above, the server **200** generates the keys and data for provision on real time network nodes **400,** e.g., HSS and AUC nodes **500,** of the **MNO.** |
| step **23** | Data provision from the server **200** onto the IT systems **300** of the **MNO.** This data provision can be performed in parallel to HSS provisioning, before or later, depending on the requirements of the **MNO.** |
| step **24** | The server **200** acts as a proxy to authenticate the Self_SIM **100** on the network nodes **400** of the **MNO** by requesting a challenge generation from the HSS/AUC nodes **500.** |
| step **25** | The generated challenge is sent from the HSS/AUC nodes **500** to the server **200** |
| step **26** | The challenge is delivered from the server **200** to the Self_SIM **100** |

After the delivered challenge is received in the Self_SIM **100** the process of authentication continues following the steps of the standardized 3GPP authentication process **30.**

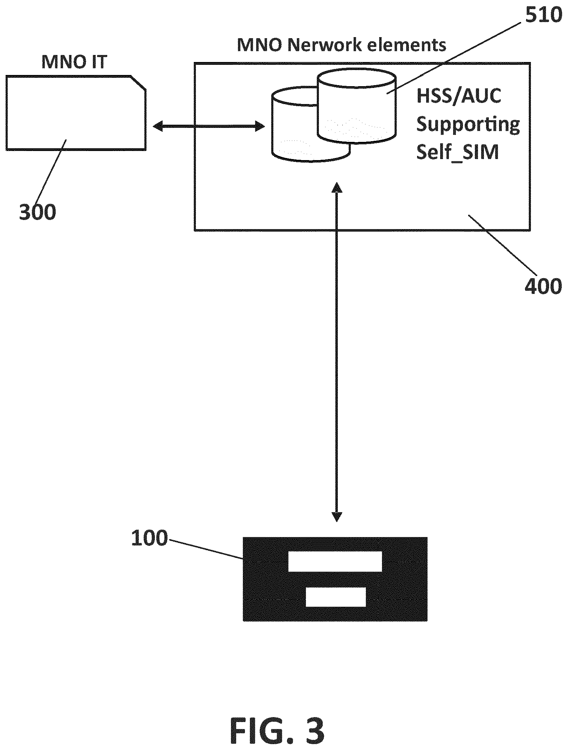

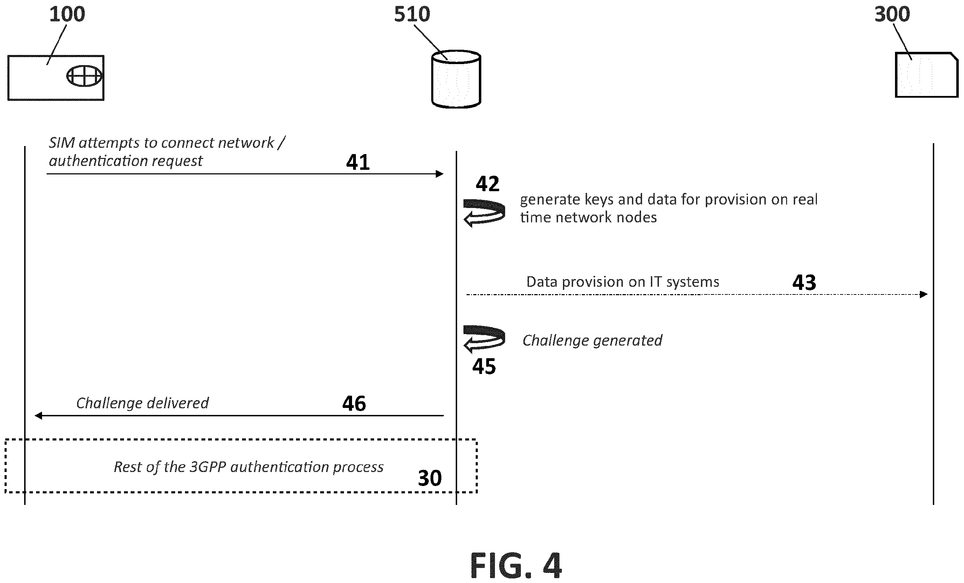

Figure 3 shows the network architecture diagram of the mobile network operator **MNO** which uses enhanced authentication nodes for self-generation of keys to provide the Self_SIM **100** by following the steps illustrated in the flow diagram of Figure 4:

| | |
|---|---|
| step **41** | The SIM of a UICC playing the Self_SIM **100** attempts to connect network sending an authentication request. |
| step **42** | Based on different authentications mechanisms as described above, the keys and data for provision are generated by enhanced nodes of |
| | the **MNO,** e.g., enhanced HSS/AUC nodes **510** supporting the capabilities of keys auto-generation. |
| step **43** | Data provision from the enhanced HSS/AUC nodes **510** on the IT systems **300** of the **MNO.** This data provision can be performed in parallel to HSS provisioning, before or later, depending on the requirements of the **MNO.** |
| step **45** | The challenge for authentication the Self_SIM **100** on the network nodes **400** of the **MNO** is generated by the enhanced HSS/AUC nodes **510.** |
| step **46** | The generated challenge is delivered from enhanced HSS/AUC nodes **510** to the Self_SIM **100.** |

After the delivered challenge is received in the Self_SIM **100** the process of authentication continues following the steps of the standardized 3GPP authentication process **30.**

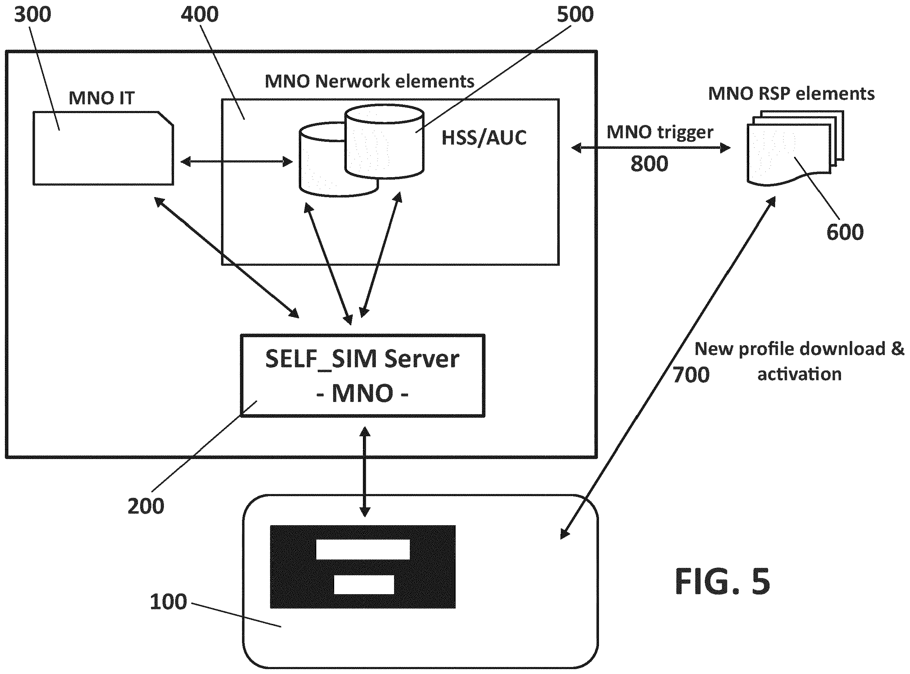

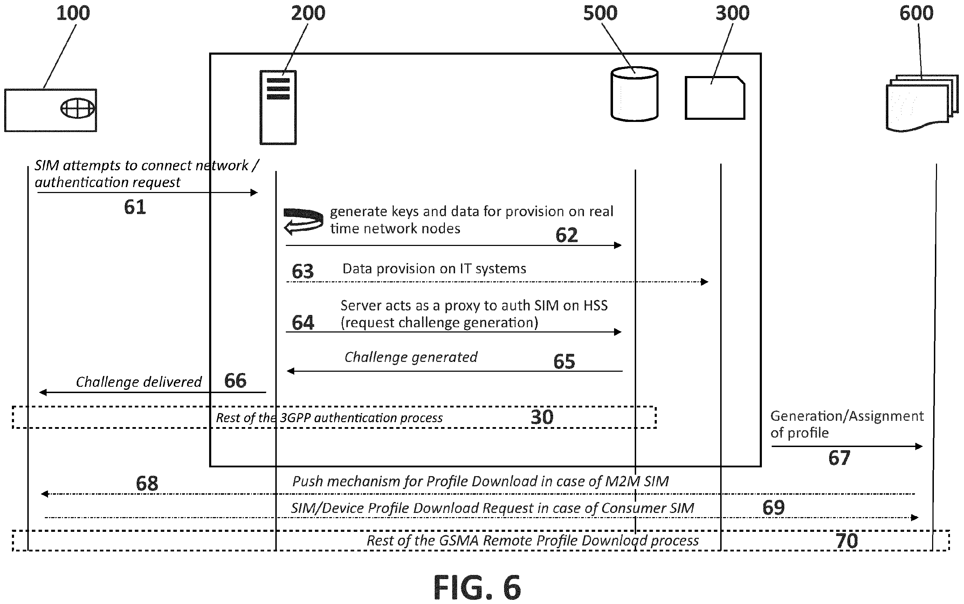

Figure 5 shows the network architecture diagram of the mobile network operator **MNO**, where a dedicated network node of the **MNO** is used for self-generation of keys to provide the Self_SIM **100** and a new SIM profile is downloaded in the mobile network operator, when the **MNO** triggers **800** the downloading and activation **700** of the new generated SIM profile, by following the steps illustrated in the flow diagram of Figure 6:

| | |
|---|---|
| step **61** | The Self_SIM **100** attempts to connect network sending an authentication request. |
| step **62** | Based on different authentications mechanisms as described above, the server **200** generates the keys and data for provision on real time network nodes **400,** e.g., HSS and AUC nodes **500,** of the **MNO.** |
| step **63** | Data provision from the server **200** onto the IT systems **300** of the **MNO.** This data provision can be performed in parallel to HSS provisioning, before or later, depending on the requirements of the **MNO.** |
| step **64** | The server **200** acts as a proxy to authenticate the Self_SIM **100** on the network nodes **400** of the **MNO** by requesting a challenge generation from the HSS/AUC nodes **500.** |
| step **65** | The generated challenge is sent from the HSS/AUC nodes **500** to the server **200** |
| step **66** | The challenge is delivered from the server **200** to the Self_SIM **100** |

After the delivered challenge is received in the Self_SIM **100** the process of SIM authentication continues following the steps of the standardized 3GPP authentication process **30.**

| | |
|---|---|
| step **67** | Generation/Assignment of the new generated SIM profile. The profile Generation/Assignment may include DS notification if needed can be triggered by any of the MNO elements: IT, HSS, Self-SIM Server **200,** ... |
| step **68** | In case of M2M SIM: Push mechanism for Profile Download sent by the Remote SIM Provisioning (RSP) elements **600** of the **MNO** to the Self_SIM **100.** |
| step **69** | in case of Consumer SIM: SIM/Device Profile Download Request sent by the Self_SIM **100** to the RSP elements **600** of the **MNO.** |

After the Push or the Request for Profile Download is received, in the Self_SIM **100** or the RSP elements **600** respectively, the process of Profile Download continues following the steps of the standardized GSMA Remote Profile Download process **70.**

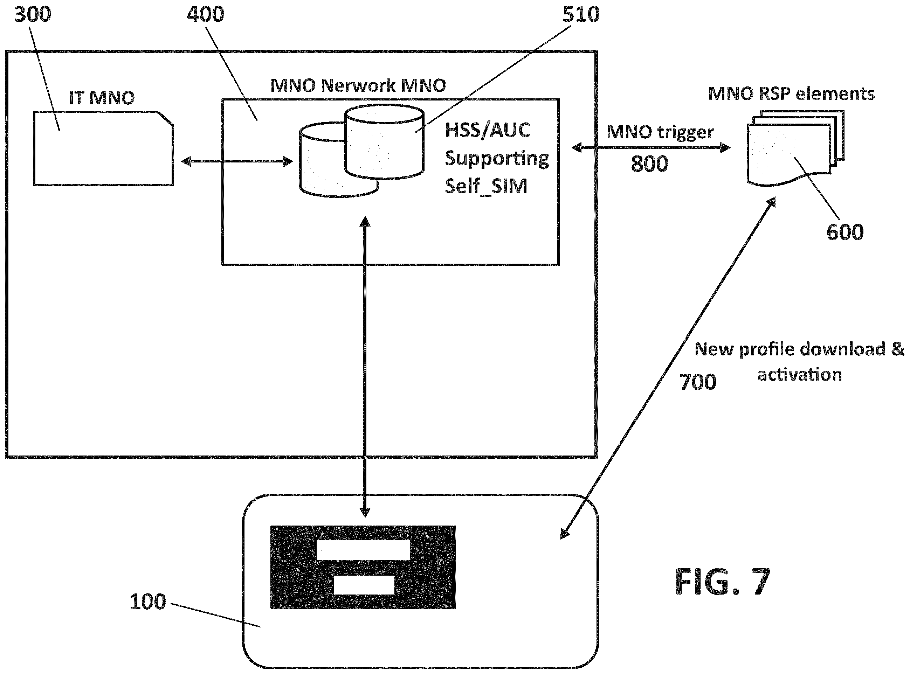

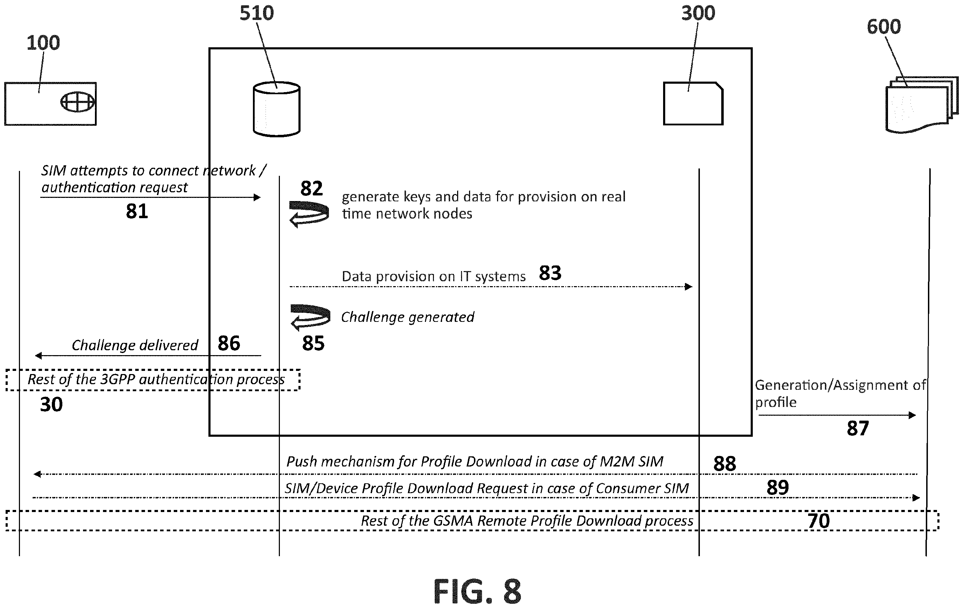

Figure 7 shows the network architecture diagram of the mobile network operator **MNO,** where enhaced authentication nodes of the **MNO** are used for self-generation of keys to provide the Self_SIM **100** and the new generated SIM profile is downloaded in the **MNO** by following the steps illustrated in the flow diagram of Figure 8:

| | |
|---|---|
| step **81** | The SIM of a UICC playing the Self_SIM **100** attempts to connect network sending an authentication request. |
| step **82** | Based on different authentications mechanisms as described above, the keys and data for provision are generated by enhanced nodes of the **MNO,** e.g., enhanced HSS/AUC nodes **510** supporting the capabilities of keys auto-generation. |
| step **83** | Data provision from the enhanced HSS/AUC nodes **510** on the IT systems **300** of the **MNO.** This data provision can be performed in parallel to HSS provisioning, before or later, depending on the requirements of the **MNO.** |
| step **85** | The challenge for authentication the Self_SIM **100** on the network nodes **400** of the **MNO** is generated by the enhanced HSS/AUC nodes **510.** |
| step **86** | The generated challenge is delivered from enhanced HSS/AUC nodes **510** to the Self_SIM **100.** |

After the delivered challenge is received in the Self_SIM **100** the process of authentication continues following the steps of the standardized 3GPP authentication process **30.**

| | |
|---|---|
| step **87** | Generation/Assignment of the new generated SIM profile. The profile Generation/Assignment may include DS notification if needed can be triggered by any of theMNO elements: IT, HSS, ... |
| step **88** | In case of M2M SIM: Push mechanism for Profile Download sent by the RSP elements **600** of the **MNO** to the Self_SIM **100.** |
| step **89** | in case of Consumer SIM: SIM/Device Profile Download Request sent by the Self_SIM **100** to the RSP elements **600** of the **MNO.** |

After the Push or the Request for Profile Download is received, in the Self_SIM **100** or the RSP elements **600** respectively, the process of Profile Download continues following the steps of the standardized GSMA Remote Profile Download process **70.**

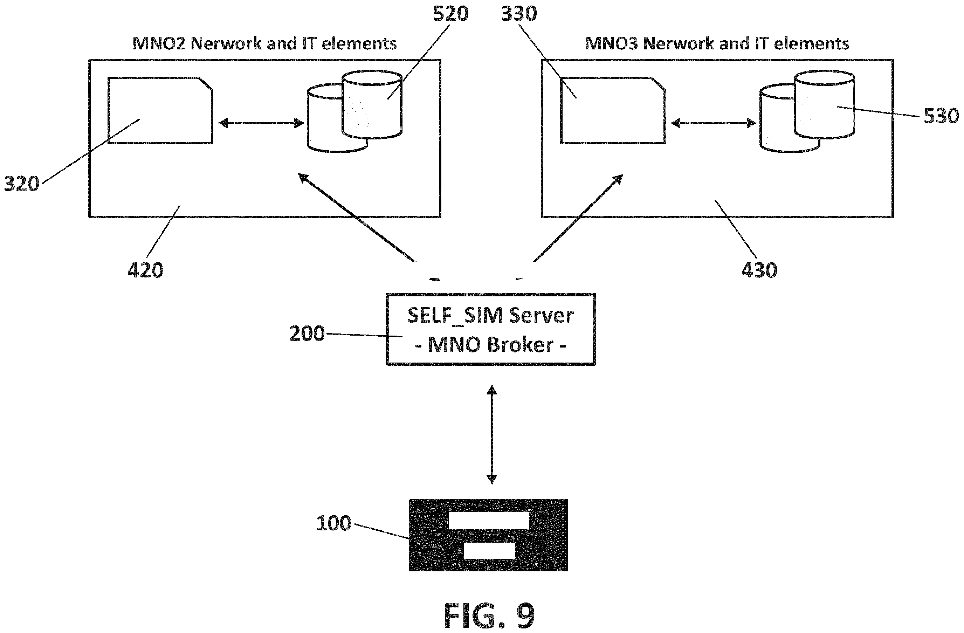

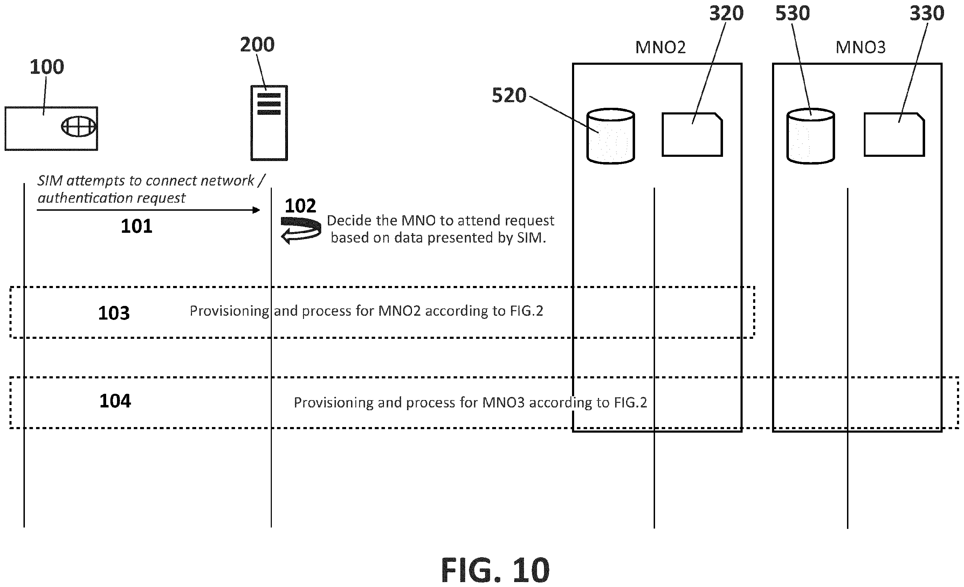

Figure 9 shows a network architecture diagram where the first mobile network operator **MNO,** which uses a dedicated network node for self-generation of keys to provide the Self_SIM **100,** also acts as a broker of connectivity between a second mobile network operator **MNO2** and a third mobile network operator **MNO3**, by following the steps illustrated in the flow diagram of Figure 10:

| | |
|---|---|
| step **101** | The Self_SIM **100** of the **MNO** attempts to connect network sending an authentication request. |
| step **102** | Based on different authentications mechanisms as described above, the server **200** of the **MNO** generates the keys and data for provision on real time network nodes **400,** e.g., HSS and AUC nodes **500,** of the **MNO.** |
| step **103** | Data provision from the server **200** of the **MNO** following equivalent steps to the steps **23-26** and **30** of Figure 2 but performed on the IT systems **320** of the second mobile network operator **MNO2**. This data provision can be performed in parallel to the provisioning of the HSS/AUC nodes **520** of the second mobile network operator **MNO2**, before or later, depending on the requirements of said second mobile network operator **MNO2**. |
| step **104** | Data provision from the server **200** of the **MNO** following equivalent steps to the steps **23-26** and **30** of Figure 2 but performed on the IT systems **330** of the third mobile network operator **MNO3**. This data provision can be performed in parallel to the provisioning of the HSS/AUC nodes **530** of the third mobile network operator **MNO3**, |
| | before or later, depending on the requirements of said third mobile network operator **MNO3**. |

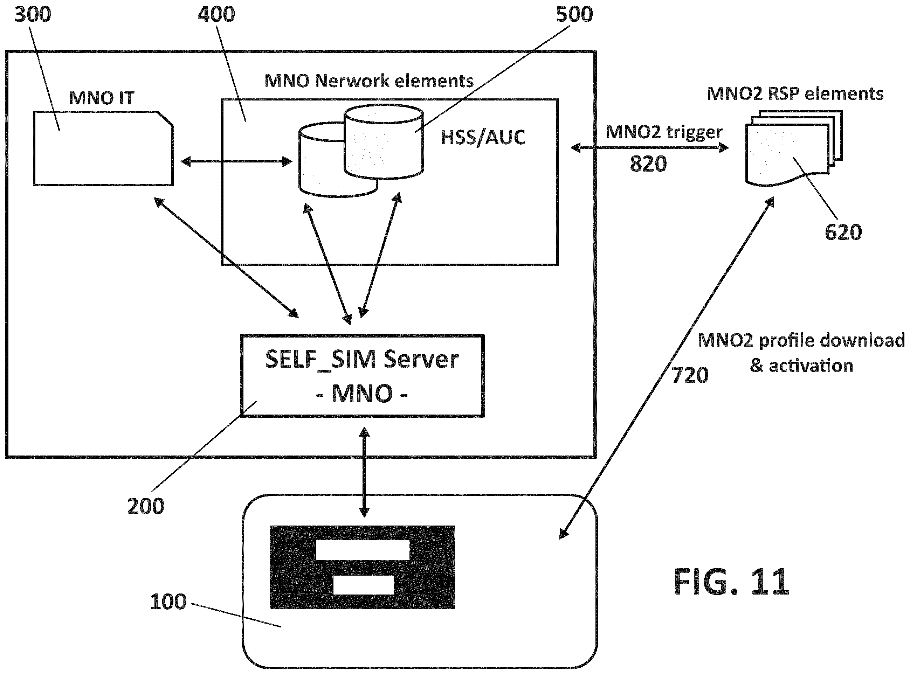

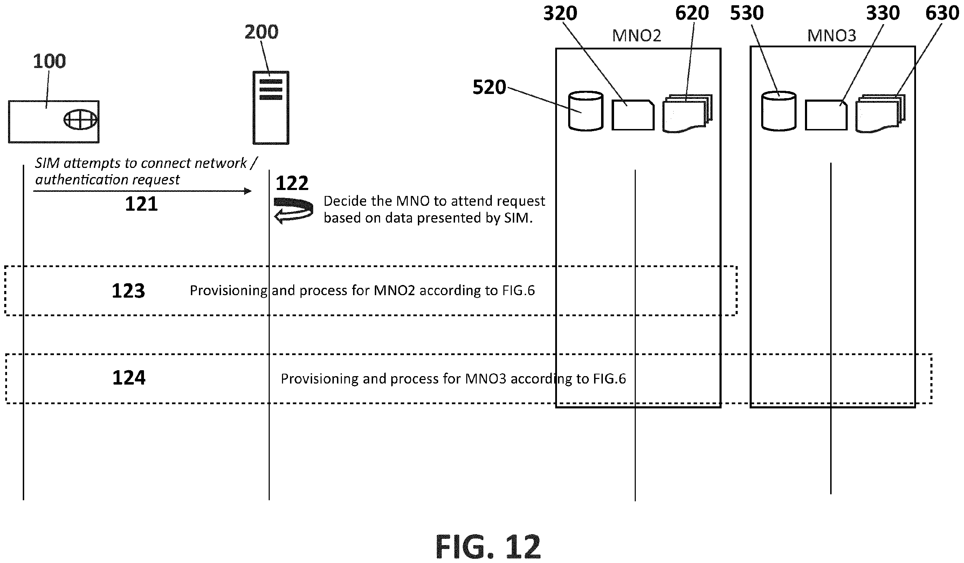

Figure 11 shows a network architecture diagram where the first mobile network operator **MNO** uses a dedicated network node for self-generation of keys to provide the Self_SIM **100** and acts as a broker of connectivity with a second mobile network operator **MNO2**. In this case, the second mobile network operator **MNO2** triggers **820** the first mobile network operator **MNO,** i.e., the broker, when the **MNO2** can download and activate **720** the new SIM profile generated by the broker **MNO.** The generated SIM profile is downloaded in the mobile network operators for which the first mobile network operator **MNO** plays as connectivity broker, the second mobile network operator **MNO2** or the third mobile network operator **MNO3** in the example, following the steps illustrated in the flow diagram of Figure 12:

| | |
|---|---|
| step **121** | The Self_SIM **100** of the **MNO** attempts to connect network sending an authentication request. |
| step **122** | Based on different authentications mechanisms as described above, the server **200** of the **MNO** generates the keys and data for provision on real time network nodes **400,** e.g., HSS and AUC nodes **500,** of the **MNO.** |
| step **123** | Data provision from the server **200** of the **MNO** following equivalent steps to the steps **63-66, 30** and **67-70** of Figure 6 but performed on the IT systems **320** of the second mobile network operator **MNO2** and using the RSP elements **620** of said second mobile network operator **MNO2**. This data provision can be performed in parallel to the provisioning of the HSS/AUC nodes **520** of the second mobile network operator **MNO2**, before or later, depending on the requirements of said second mobile network operator **MNO2**. |
| step **124** | Data provision from the server **200** of the **MNO** following equivalent steps to the steps **63-66, 30** and **67-70** of Figure 6 but performed on the IT systems **330** of the third mobile network operator **MNO3** and using the RSP elements **630** of said third mobile network operator **MNO3**. This data provision can be performed in parallel to the provisioning of the HSS/AUC nodes **530** of the third mobile network operator **MNO3**, before or later, depending on the requirements of said third mobile network operator **MNO3**. |

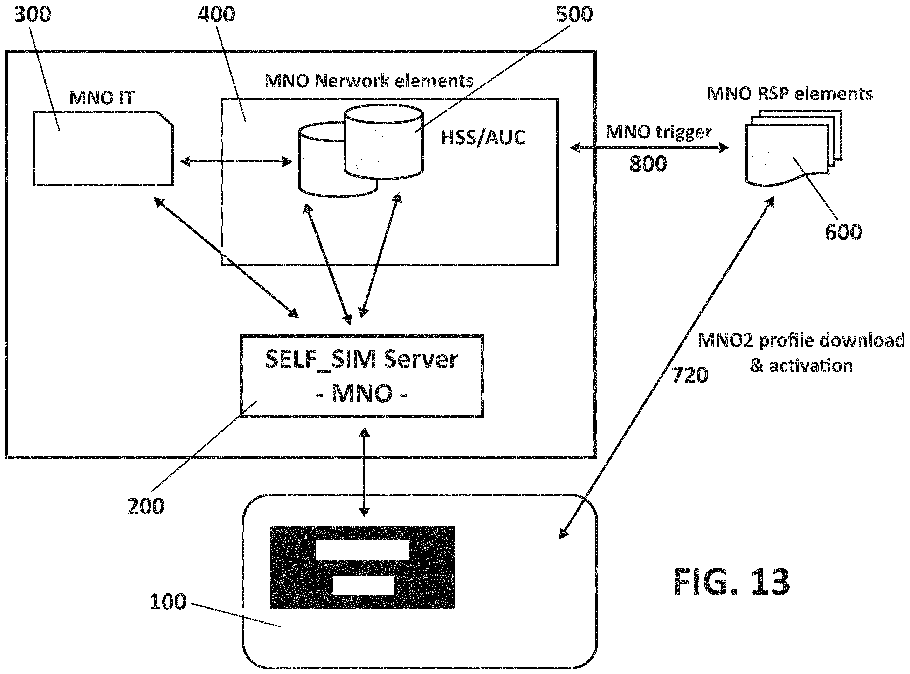

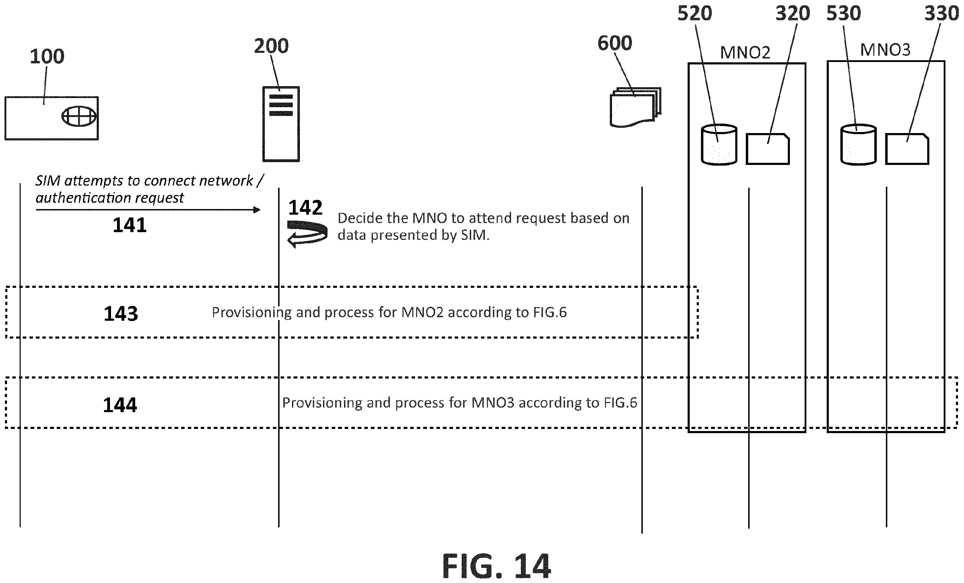

Figure 13 shows a network architecture diagram where the first mobile network operator **MNO** uses a dedicated network node for self-generation of keys to provide the Self_SIM **100** and acts as a broker of connectivity with a second mobile network operator **MNO2**. In this case, the first mobile network operator **MNO** is the one in charge of triggering **800** the second mobile network operator **MNO2** so that **MNO2** can download and activate **720** the new SIM profile generated by the first mobile network operator **MNO.** This profile download is performed using the infrastructure of the broker, i.e., the first mobile network operator **MNO,** for remote SIM provisioning by following the steps illustrated in the flow diagram of Figure 14:

| | |
|---|---|
| step **141** | The Self_SIM **100** of the **MNO** attempts to connect network sending an authentication request. |
| step **142** | Based on different authentications mechanisms as described above, the server **200** of the **MNO** generates the keys and data for provision on real time network nodes **400,** e.g., HSS and AUC nodes **500,** of the **MNO.** |
| step **143** | Data provision from the server **200** of the **MNO** following equivalent steps to the steps **63-66, 30** and **67-70** of Figure 6 but performed on the IT systems **320** of the second mobile network operator **MNO2** and using the RSP elements **600** of the broker **MNO.** This data provision can be performed in parallel to the provisioning of the HSS/AUC nodes **520** of the second mobile network operator **MNO2**, before or later, depending on the requirements of said second mobile network operator **MNO2**. |
| step **144** | Data provision from the server **200** of the **MNO** following equivalent steps to the steps **63-66, 30** and **67-70** of Figure 6 but performed on the IT systems **330** of the third mobile network operator **MNO3** and using the RSP elements **600** of the broker **MNO.** This data provision can be performed in parallel to the provisioning of the HSS/AUC nodes **530** of the third mobile network operator **MNO3**, before or later, depending on the requirements of said third mobile network operator **MNO3**. |

The following steps describe how to use the solution in the benefit of reaching a commercial agreement without having to carry out integrations between OEMs:
- An eSIM vendor agrees project with a Service Provider, SP, which is usually a mobile network operator. The SP may play a role for authenticating its own subscriptions or just act as a hub for providing access to other SPs or MNOs.
- SP and eSIM vendor agree on "configuration": diversification values, process and algorithm for keys/data_content on the fly generation, volumen of SIMs for this configuration, etc.
- SP provisions diversification values, process and algorithm in corresponding network elements.
- eSIM vendor integrates the agreed configuration in the OS configuraton for the specific SP and product.
- The "Key delivery ceremony" in the configuration process needs to be highly secure, and after this process, "data" managing must also follow strict secure rules.
- eSIM vendor gets project with an OEM (i.e. wearable maker).
- eSIM vendor can deliver to its customers (mainly OEMs) the "eSIM + OS" with self generation capabilities. Depending on the device arquitecture, only the OS is provided.
- OEM sold the eUICC or just "install"OS on the secure hardware.
- During personalization and manufacturing time, any quality process can be executed to garranty end-to-end functionality of the product.
- Devices are sold (e.g., B2B: Business to Business) y el B2C, B2C: Business to Consumer, or B2B2C).
- The Consumer/End User turns on the device that contains an eUICC so that the device can follow the procedure described above to attach the network,
- After the end user device attachs the network, depending on the configuration, type of product, etc. and the approach of the mobile network operator, the network may provide the eSIM with full mobile service access.
- Access for downloading an "official" eSIM profile (from the same mobile network operator or from a different one, in case the initial -first- mobile network operator plays the role of a connectivity hub provider).In case of eSIM profile downloaded, initial values related to network resources such as IMSI or ICCiD can be reused for future products.
- If the initial -first- mobile network operator acts as an authentication proxy for other mobile network operators, the initial MNO is a HSS/AUC front-end. parsing from non-provisoned SIMs to regular provisioned SIMs.

The above described embodiment of the invention can be used on other scenarios such as 5G slicing, within different models and/or in different use cases accorrding to the different possible slices defined with specific network capabilities and characteristics.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for generating profiles in a Universal Integrated Circuit Card, UICC, comprising:
- a subscriber identity module, SIM (100), attempts to connect a network (400) of a first mobile network operator (MNO) by sending an authentication request (21, 41, 61, 81, 101, 121, 141);
**characterized by** further comprising the following steps:
- an operator server of the first mobile network operator (MNO) receiving the authentication request (21, 41, 61, 81, 101, 121, 141) from the SIM (100) generates keys and data for provision of the SIM (100) in real time on the network (400),
- provisioning the generated data from the operator server of the first mobile network operator (MNO) on an IT system (300) of the first mobile network operator (MNO) or on another IT system (320, 330) of at least one mobile network operator (MNO2, MNO3) different from the first mobile network operator (MNO),
- authenticating the generated keys on the network (400) of the first mobile network operator (MNO) by requesting a challenge generation and receiving the generated challenge in the SIM (100).

2. The method according to claim 1, wherein authenticating the generated keys on the network (400) comprising configuring the operator server as a proxy in a server (200) implemented in a dedicated node of the first mobile network operator (MNO), the proxy requesting the challenge generation to a home location register, an authentication center, a home subscriber server, a unified data management or a unified data repository of the first mobile network operator (MNO) and delivering the generated challenge to the SIM (100).

3. The method according to claim 1, wherein authenticating the generated keys on the network (400) comprising generating the challenge by the operator server and delivering the generated challenge from the operator server to the SIM (100).

4. The method according to any of the preceding claims, further comprising, after authenticating the generated keys, downloading and activating the generated keys and data using remote SIM provisioning elements (600), RSP, of the first mobile network operator (MNO).

5. The method according to claim 2, further comprising, after authenticating the generated keys, downloading and activating the generated keys and data through the server (200) using Remote SIM Provisioning elements (620, 630) of the at least one mobile network operator (MNO2, MNO3) different from the first mobile network operator (MNO).

6. A Universal Integrated Circuit Card, UICC, **characterized by** comprising a subscriber identity module, SIM (100), generated by the method defined according to claims 1-5.

7. An operator server **characterized by** being configured to provide the UICC defined according to claim 6.

8. The operator server according to claim 7 **characterized by** being a server (200) implemented in a dedicated node of a first mobile network operator (MNO) to which the SIM (100) attempts to connect.

9. The operator server according to claim 7 **characterized by** being incorporated in a home location register, an authentication center, a home subscriber server, a unified data management or a unified data repository.
